Europäisches Patentamt

European Patent Office

Office européen des brevets

(19)

(11) Publication number: **0 283 256**
**A2**

# (12) EUROPEAN PATENT APPLICATION

(21) Application number: **88302276.6**

(22) Date of filing: **16.03.88**

(51) Int. Cl.⁴: **G 02 B 21/00**

(30) Priority: **18.03.87 US 28420**

(43) Date of publication of application:
**21.09.88 Bulletin 88/38**

(84) Designated Contracting States: **DE FR GB**

(71) Applicant: **TEKTRONIX, INC.**
**Howard Vollum Park 14150 S.W. Karl Braun Drive P.O. Box 500**
**Beaverton Oregon 97077 (US)**

(72) Inventor: **Mitch, John H.**
**6685 S.W. Alfred Street**
**Tigard Oregon 97223 (US)**

(74) Representative: **Baillie, Iain Cameron et al**
**c/o Ladas & Parry Isartorplatz 5**
**D-8000 München 2 (DE)**

(54) **Scanning optical microscope.**

(57) A scanning optical microscope is disclosed in which the laser that illuminates the specimen is also used as a component of the optical detector system. This dual use of the laser permits substantial simplification of the microscope optics and the associated scanning mechanism. For example, the beam splitters and other bulk optic components required in prior art devices are replaced by a single optical fiber linking the laser and the specimen. A micro-lens is formed on the terminal end of the fiber to focus the laser light onto the specimen. The optical fiber is mounted over the specimen and its terminal end portion is caused to swing back and forth in reciprocal motion above it, this motion being induced by electromagnetic or electrostatic interaction between the fiber and associated electromagnets or deflection plates. The periodic drive signals that induce this oscillatory fiber motion are synchronized to the fiber's natural mechanical resonant frequency by an optical position detector.

FIG.1

Bundesdruckerei Berlin

**Description**

## SCANNING OPTICAL MICROSCOPE

TECHNICAL FIELD

The present invention relates to scanning optical microscopes.

BACKGROUND AND SUMMARY OF THE INVENTION

Scanning optical microscopes are imaging systems in which a beam of optical energy is systematically swept across a specimen so as to illuminate it in raster scan fashion. Some of the optical energy directed onto the specimen is reflected back into the microscope where it is periodically sampled so as to map out an image of the specimen, element by element, as the scanning movement takes place. This data can be displayed immediately on a raster scanned display or it can be stored in a computer memory for later use.

Such imaging systems offer some important advantages over competing technologies, such as scanning electron microscopes. Firstly, the range of specimens which can be studied is much less restricted since the specimens do not need to be scanned in vacuo and also do not need to be resistant to damage from exposure to an electron beam. For example, many biological specimens (particularly living organisms) and many modern semiconductor devices (e.g. MOS devices) will suffer damage if studied in a scanning electron microscope. Secondly, scanning electron microscopy is essentially a surface technique because of the very limited penetration depth of kilovolt electrons. In contrast, depending on the nature of the specimen and the wavelength of the scanning light beam, scanning optical microscopes can be used to study internal structures of specimens, provided these structures have optical characteristics differing from those of the remainder of the specimen.

An exemplary scanning optical microscope is shown in British patent publication 2,152,697A to Brearley. Light from a laser is directed through a beam expander lens so as to form a broad beam of parallel coherent radiation. This beam is passed through a beam splitter to a scanning optics assembly which is positioned in front of the object to be scanned. The scanning optics assembly comprises a focusing lens mounted on a mechanical system comprised of torsion bars, counterweights and pivots. The focusing lens is caused to move back and forth along a scanning line by electromagnets which cause the scanning optics assembly to oscillate. Light reflected from the object being scanned retraces its path back through the focusing lens and is deflected by the beam splitter to a photodetector which quantitizes the amount of reflected radiation. A computer samples and digitizes the photodetector output and stores the resultant data in a memory.

Although theoretically sound, the Brearley system and related devices have not been successful. One reason has been the relative inefficiency of the mechanisms used to effect the scanning motion of the focusing lens, such as the mechanical oscillation system used in the Brearley device and the rotating prisms or mirrors and the specimen vibration using in other prior art systems. Such precision mechanical systems have been expensive, unreliable and have been able to attain the desired level of performance only with extremely critical adjustment.

The present invention provides several improvements over existing scanning optical microscope technologies. One feature of the invention is the use of novel light detection techniques employing the laser light source itself as part of the detector. Light reflected from the specimen is reflected back into the laser where it is amplified by the laser's stimulated emission properties. This amplified reflected light causes the laser's light output and other operational characteristics to vary depending on the magnitude and phase of the reflected light. These characteristics are detected, either by monitoring changes in the laser's optical output or by monitoring changes in the laser's electrical operating parameters, so as to determine the characteristics of the specimen being scanned.

This use of the laser as both the optical source and as an integral component of the optical detector greatly simplifies the optics of a scanning optical microscope. In the preferred form of the invention, a single optical fiber is used to link the laser to the specimen. Beam splitters and other bulk optic components required in prior art devices, such as those illustrated in the Brearley publication, are thus avoided.

This simplification of the microscope optics allows a radical simplification in the physical scanning mechanism. Instead of the complex lens oscillation systems used in the prior art, the optical fiber used in the present invention is simply mounted over the specimen and a free end portion of the fiber is caused to swing back and forth in reciprocal motion above it. This reciprocal motion can be effected by metallizing the free end portion of the fiber and periodically attracting it to an adjacent electromagnet so as to induce the free end portion to vibrate at its natural resonant frequency. Movement of the specimen in the orthogonal direction for scanning successive lines of the raster scan frame is effected by a conventional precision positioning stage.

As still a further feature of the preferred form of the invention, the bulk optic lens used in the prior art to focus light from the light source onto the specimen is here replaced with a micro-lens formed integrally on the terminal end of the scanning fiber. This construction reduces the size of the focusing optics to the scale of the fiber core itself.

These and other features and advantages of the present invention will be more apparent from the following detailed description, which proceeds with reference to the accompanying drawings.

## BRIEF DESCRIPTION OF THE DRAWINGS

Fig. 1 is a block diagram illustrating one form of the present invention.

Fig. 2 is an enlarged view showing the terminal end of a scanning fiber in the apparatus of Fig. 1.

Fig. 3 is a view taken along lines 3-3 of Fig. 2 showing the arrangement of optical fiber, electro- magnets and synchronization detectors used in the apparatus of Figs. 1 and 2.

Fig. 4 is a view showing the use of deflection plates with an electrostatically charged optical fiber.

Fig. 5 is a front elevational view showing a micro-lens integrally formed on the terminal end of an optical fiber.

## DETAILED DESCRIPTION OF PREFERRED EMBODIMENT

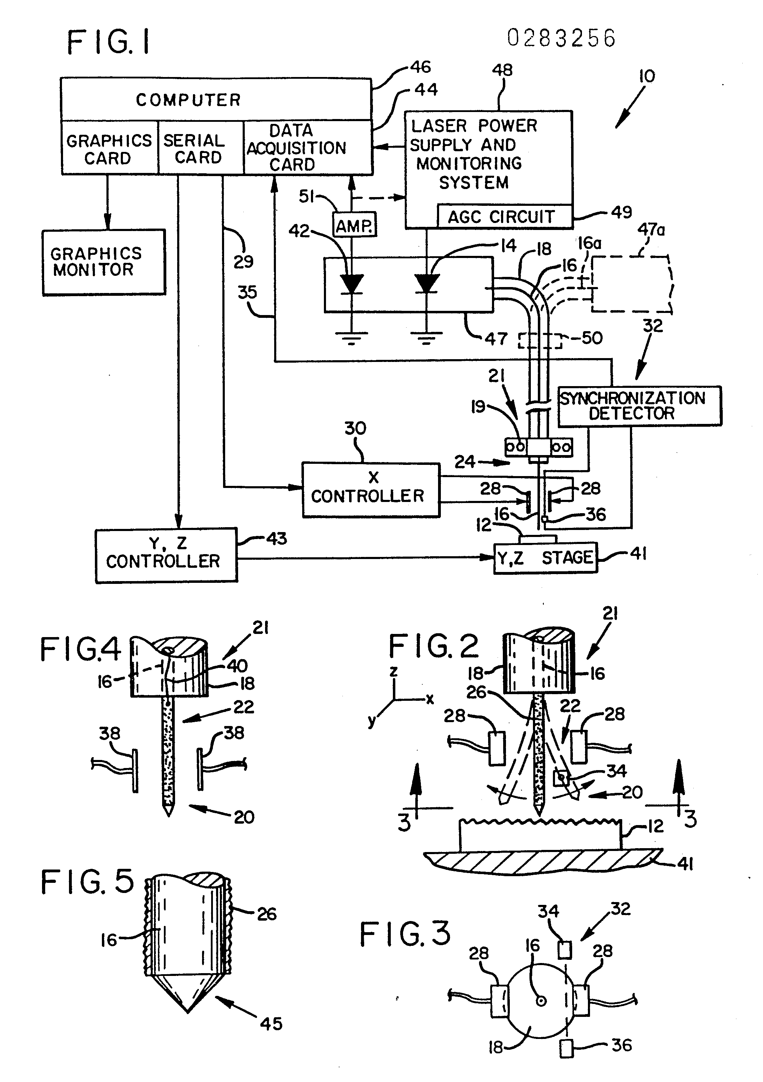

With reference to Fig. 1, a preferred form of a scanning optical microscope 10 for imaging an object or specimen 12 includes an optical source 14, an optical detector (discussed below) and an optical fiber 16. Optical source 14 provides coherent radiation for projection onto specimen 12 and desirably comprises a solid state injection laser diode. Optical fiber 16 serves to couple optical energy from optical source 14 to object 12 and desirably comprises a single mode fiber encased in a sheath 18. Optical fiber 16 also serves to couple optical energy reflected from object 12 back into the laser for detection as discussed below.

## SCANNING SYSTEM

A scanning system 21 is provided for moving a terminal end 20 of optical fiber 16 relative to the specimen 12 to be scanned. Scanning system 21 includes an anchor system 19 for holding a portion of the optical fiber 16 stationary at a fixed point 24. Anchor system 19 can comprise, for example, a clamp that rigidly affixes sheath 18 near terminal end 20 to a fixed support member. Anchor system 19 thus serves to define a free end portion 22 of fiber 16 that extends from fixed point 24 to terminal end 20. Scanning system 21 further includes a means for imparting oscillatory motion to the free end portion of the fiber. To facilitate this oscillatory motion, sheath 18 is desirably removed from the free end portion of the fiber.

In the form of the invention illustrated in Fig. 1, the means for imparting oscillatory motion includes magnetically attractable material 26 (Figs. 2, 5) attached to free end portion 22 of fiber 16. This magnetically attractable material can comprise a thin layer of nickel that is sputtered or otherwise bonded to the fiber. Adjacent free end portion 22 of fiber 16 is at least one electromagnet 28. Connected to electromagnet 28 is an X controller system 30 for periodically exciting the electromagnet with electrical energy so as to periodically attract the fiber towards the electromagnet. X controller system 30 is driven from a serial output port 29 of a control computer 46. This periodic excitation serves to impart oscillatory motion to free end portion 22 of fiber 16.

Free end portion 22 of fiber 16 has a natural mechanical period of oscillation determined principally by its length. This length of the free end portion may range from less than one inch up to several inches, depending on the particular application. In one form of the invention, microscope 10 further includes a synchronization detector 32 for synchronizing the periodic excitation of the electromagnet with the free end portion's natural period of oscillation. The illustrated synchronization detector comprises an optical source 34 and detector 36 (Figs. 1-3) which transmit a beam of optical energy along a path through which the fiber travels as it oscillates. Each interruption of this optical beam by the fiber causes an interruption in the output signal provided by optical detector 36. This output signal is fed to a data acquisition input 35 of computer 46. Computer 46, in turn, uses this output signal to synchronize the periodic signals fed to X controller 30, thereby synchronizing the periodic excitation of electromagnet 28 with the fiber's natural period of excitation.

In one form of the invention, X controller 30 excites electromagnet 28 with periodic pulses of DC voltage. This pulsing of electromagnet 28 causes the fiber to oscillate approximately sinusoidally so that the rate of movement of terminal end 20 is greatest in the center of its arc of travel and reduces to zero at its extremes. This sinusoidal rate of travel causes data samples to be taken at non-uniformly spaced intervals along the specimen. Resolution of the sampled image varies accordingly.

If it is desired to sample data from the object at more uniformly spaced intervals, a number of techniques can be used. The first is to arrange the system so that the arc of travel of the fiber extends over a much longer length of the specimen than is of interest. Reflected light is then sampled only during the few degrees of arc when the fiber is near its center of oscillatory travel. At this midportion of travel, the speed of the fiber's movement over the specimen is substantially uniform. Thus, the distance between sampled data points on the object is also substantially uniform.

In another form of the invention, electromagnet 28 can be excited with a signal waveform chosen to cause the terminal end of the optical fiber to move at a substantially uniform rate across a greater percentage of its travel. Instead of a simple DC pulse being applied repetitiously to the electromagnet, a periodic time varying signal is applied. Considered as a pendulum undergoing simple harmonic motion, the angular velocity of the tip of free end portion 22 varies sinusoidally with time, and by tailoring the waveform that excites the electromagnet so as to compensate for that velocity variation, the terminal end of the optical fiber can be caused to move at a more uniform rate.

In still other embodiments of the present invention, a uniform distance between sampling points can be achieved by processing the data points stored in the computer so as to generate a data set representative of a uniform sampling distance.

In another form of the invention shown in Fig. 4, oscillation system 21 relies on electrostatic attraction and repulsion, rather than electromagnetic attraction, to cause free end portion 22 of fiber 16 to oscillate. This system includes at least one electrostatic deflection plate 38 and means for imparting an electrical charge to free end portion 22 of fiber 16. In the illustrated embodiment, this charge is imparted by a wire 40 that applies a DC voltage to a layer of metallization formed on the free end portion of fiber 16. Again, an X controller similar to controller 30 of Fig. 1 can be used to periodically excite electrostatic deflection plate 38 as necessary to achieve the desired oscillation.

Movement of specimen 12 in the orthogonal, Y direction needed to complete a full raster scan frame is effected by a Y,Z stage 41 on which specimen 12 is positioned. Y, Z stage 41 can employ conventional precision positioning technology, such as piezoelectric positioners, to move the specimen with the required degree of precision. Such movement is effected under control of computer 46 by a Y,Z controller 43. Y,Z stage 41 can also be moved in the Z direction, again by conventional means, so as to place the focal region of the light projected by the optical fiber properly with respect to the specimen.

FOCUSING OPTICS

In the preferred form of the invention, the light projected onto specimen 12 by terminal end 20 of fiber 16 is focused to a small spot (i.e. less than one micrometer) by a micro-lens 45 on the end of the fiber. Micro-lens 45 can be formed on fiber 16 in several ways. One is by chemical etching. The terminal end of the fiber can be etched in hydrofluoric acid, thereby resulting in a sharp spike centered on the end of the fiber. The micro-lens can be left in this condition or it can be further processed into a more rounded shape by flaming. Flaming rounds the spike by melting part of the quartz, thereby allowing surface tension to act. Alternatively, the terminal end of quartz fiber 16 can be formed into a lens by conventional mechanical grinding techniques.

In a typical embodiment, laser 14 operates at 1300 nanometers. A single mode fiber 16 for this wavelength has a core size of 9 microns. A micro-lens formed on a 9 micron fiber can readily attain an imaging resolution of less than one micron. Resolution can be enhanced further by use of a shorter wavelength laser. For example, if laser 14 operates at 800 nanometers, fiber 16 would be selected to have a core size of 4 to 5 microns and a corresponding improvement in resolution would be obtained.

The focal length of a preferred micro-lens formed by chemical etching is about 5 to 10 microns. If the lens is not rounded by flaming, it will not exhibit a well defined focal length, but rather a larger focal zone, such as the cited 5 to 10 micron figure.

Although a conical lens, such as is used in the illustrated embodiment, exhibits image aberrations, these are of little importance when the dimensions of the lens are within an order of magnitude of the dimensions of the features being imaged. Furthermore, the use of the lens in this point by point synthetic image reconstruction system further reduces the importance of lens errors.

All optical microscope systems are diffraction limited to approximately 1/2 the wavelength of the illumination light source. This limits the resolution to about .3 to .4 microns when the illumination source is in the visible spectrum. The present invention is also ruled by the same diffraction limit. However, since the effects of diffraction are well known, the computer desirably corrects the image by removing these effects so as to reconstruct a closer approximation of the real object. Use of shorter wavelength lasers also improves the resolution of the image.

When the present invention is in the form of an oscillating fiber scribing an arc above the object, the distance from the fiber lens to the object changes with time. The lens-to-object distance is at a minimum when the fiber is at the center of its arc and increases as the fiber moves to either side. This changing distance introduces a phase change into the image data collected by the system. (For a length R of free end portion 22, that phase change is given by $d\pi/\lambda$ where $\lambda$ is the wavelength of the laser light and $d = R(1-\cos\theta)$, where $\theta$ is the rotation angle of free end portion 22 away from the vertical). Since the position of the fiber lens as it traverses the arc in simple harmonic motion is well known, the computer is able to subtract out this time varying phase change factor so as to produce an image that accurately represents the object.

OPTICAL DETECTION

Part of the optical energy directed onto specimen 12 by micro-lens 45 is reflected from the specimen and back into the fiber. This reflection is a function of several factors, including the topography and reflectivity of the surface of specimen 12 at the laser's wavelength. The energy reflected back into the fiber 16 retraces its travel through the fiber and is coupled back into laser diode 14.

The light reflected back into laser diode 14 from specimen 12 is amplified by the stimulated emission property of the laser. The amplification of this reflected light within the laser causes the operational characteristics of the laser to vary depending upon the magnitude and phase of the reflected light. These operational characteristics are sampled by computer 46 so as to build up, element by element, a data set representative of the specimen being scanned.

In the preferred form of the invention, the operational characteristic of interest is the laser's light output. This light output can be monitored by a photodetector diode 42. The output from photodetector diode 42 is fed to a data acquisition card 44 in computer 46. This data acquisition card samples the analog photodetector output signal and converts these samples into corresponding 12-bit digital representations. These digital representations are indicative of the phase and magnitude of light reflected from the object.

In this form of the invention, monitor diode 42 and laser diode 14 can comprise a single laser module 47, such as Tektronix part LDM 1300 or LDM 1301. Each of these modules includes an internal photodetector positioned to monitor the laser's light output for the intended purpose of facilitating regulation of the laser's output power. In the present invention, however, the internal photodetector is advantageously employed to detect variations of the laser's light output caused by the introduction of reflected light.

In its usual application, the monitor diode included in the Tektronix LDM 1300 laser module is reverse biased and its output fed to an operational amplifier. In this reversed biased state, the operational amplifier amplifies the photodiode's dark current, which changes as an exponential function. The resultant signal is then fed back to the laser power supply to regulate the laser's output power. In the present application, by contrast, the monitor diode is unbiased. It is connected to a virtual ground input of a conventional operational amplifier circuit 51 so that the monitor diode appears to be driving a short circuit. The operational amplifier is configured to provide a one volt change in output voltage for each milliampere change in input current. This transfer function is substantially linear over the photodiode's output range of interest. In a typical application, if laser diode 14 is operated at 60 milliamperes, the light reflected back into the laser may cause the output current from the monitor 42 to change 0.1 or 0.2 milliamperes, thereby causing a 0.1 or 0.2 volt swing in the output voltage from operational amplifier 51. This output voltage is then sampled and digitized by data acquisition card 44 of computer 46, as noted above.

In another form of the invention, the reflected light detector monitors the electrical, rather than optical, operating characteristics of laser 14. Laser 14 is operated from a laser power supply 48. This power supply biases the laser junction at a predetermined operating voltage and current. When light is reflected from the specimen back to the laser diode, the laser's electrical operating parameters change. In one form of the invention, the laser is operated in a constant current mode and power supply 48 monitors the voltage across the laser diode junction. In another form of the invention, the laser is operated in a constant voltage mode and power supply 48 monitors the laser current. These monitored parameters are again fed to data acquisition card 44 of computer 46, which card converts the analog signals to digital signals for processing and recording in the computer.

In still another embodiment of the present invention, laser 14 is provided with an automatic gain control circuit 49 that regulates the laser's output power by regulating the voltage and current that bias the laser diode junction. When a change in the light reflected back into laser 14 as would cause the light output to change, the automatic gain control circuit automatically adjusts the laser's operating parameters so as to maintain the laser's output power at a constant level. In this form of the invention, the optical detector monitors the automatic gain control signal used by the AGC circuit so as to detect variations in then laser's electrical operating parameters.

In still another embodiment, a fiberoptic directional coupler is used to sample reflected light. The coupler is a device that can combine or split light, depending on the direction the light travels through the coupler. In this embodiment, an optical detector, such as a photodiode, is positioned to detect light at the coupler output. Computer 46 then periodically samples the output of this detector so as to build a sampled image of the specimen being scanned.

The operational characteristic of laser 14 being sampled, whether it be light output or an electrical characteristic, can be correlated to the relative lightness or darkness of the object being imaged. Light portions of the object will reflect a correspondingly greater amount of light than dark portions of the object, with a corresponding change in the sampled operational characteristic.

More importantly, the operational characteristic of laser 14 being sampled can further be used to form a topographical image of a reflective surface. Since the reflected light is mixed with the incident light, the resultant light intensity will be at a maximum if the incident and reflected lights are in phase and will be at a minimum if the reflected and incident lights are 180 degrees out of phase. A 180 degrees phase shift is effected by a feature on the surface that is a quarter wave length in height or in depth.

The rate at which this reflected light data is sampled is determined by the sampling rate of data acquisition card 44. In an exemplary form of the invention, the sampling rate is 10 kilohertz. With a fiber oscillation frequency of 10 hertz, each pass of the fiber over the sample (one-half cycle of oscillation) allows the acquisition of 500 sampled data points. In the fiber's arc of travel covers 100 microns above the specimen, a sample is taken, on average, every 0.2 micron. Similar resolution can be obtained in the Y direction by a suitable piezoelectric positioner stage 41. This 0.2 micron $\tau$ and Y resolution can be enhanced somewhat further by appropriate digital signal processing of the entire frame of data points.

RESOLUTION OF TOPOGRAPHICAL AMBIGUITIES

In imaging systems relying on the phase of the reflected light to determine specimen topography, it is difficult to distinguish features differing in height by integral multiples of a half wavelength. In order to overcome such ambiguities, one form of the invention images the specimen using light of two different wavelengths. The light reflected at the second wavelength is then examined to resolve any ambiguities in the image that is generated from light reflected at the first wavelength.

Such a dual wavelength embodiment uses two optical sources and two optical detectors, desirably coupled to a single multimode scanning optical fiber. With reference to the dashed components shown in Fig. 1, light from a second laser module 47a is combined with light from first laser module 47 by a conventional coupler 50 so as to provide a composite optical signal for illumination of specimen 12. Light reflected from specimen 12 is similarly split by coupler 50 and routed back into the two laser modules. First laser module 47, which operates at the first wavelength, is sensitive only to reflected light at that first wavelength. Similarly, second laser module 47a, which operates at the second wavelength, is sensitive only to reflected light at that second wavelength. The operational characteristic of interest is sampled from the second laser module in the manner discussed above in connection with the first laser module by correspondingly similar components. Computer 46 then resolves any topographical images in the sampled surface of specimen 12 by comparing the image data provided at the first and second wavelengths.

Having described and illustrated the principles of my invention in a preferred embodiment and several variations thereof, it should be apparent to those skilled in the art that the invention can be modified in arrangement and detail without departing from such principles. For example, the scanning fiber construction can readily be employed in systems in which the microscope detects light that is transmitted through, rather than reflected from the specimen. Similarly, the dual use of a laser as both an optical source and an element of an optical detector has application in a variety of systems not discussed in connection with the preferred form of the invention. Accordingly, I claim all modifications coming within the scope of the following claims and equivalents thereof.

**Claims**

1. A scanning optical microscope for imaging an object comprising:
an optical source;
an optical detector;
an optical fiber for coupling optical energy from the optical source to the object and for coupling optical energy reflected from the object to the optical detector, said optical fiber having a terminal end for positioning adjacent the object; and
scanning means for moving the optical fiber relative to the object, said scanning means including anchor means for holding a portion of the optical fiber stationary at a fixed point so as to define a free end portion of the optical fiber extending from the fixed point to the terminal end, the scanning means further including oscillation means for imparting oscillatory motion to the free end portion of the optical fiber.

2. The scanning optical microscope of claim 1 in which the oscillation means includes:
magnetically attractable material attached to the free end portion of the optical fiber;
at least one electromagnet adjacent the free end portion of the optical fiber; and
excitation means for periodically exciting the electromagnet with electrical energy so as to impart oscillatory motion to the free end portion of the optical fiber.

3. The scanning optical microscope of claim 2 in which the free end portion of the optical fiber has a natural mechanical period of oscillation and in which the excitation means includes synchronizing means for synchronizing the periodic excitation of the electromagnet with said natural period of oscillation.

4. The scanning optical microscope of claim 3 in which the synchronizing means comprises position detector means for providing a synchronizing signal to the excitation means when the free end portion of the optical fiber is at a certain point.

5. The scanning optical microscope of claim 2 in which the means for periodically exciting the electromagnet comprises signal generator means for producing a periodic time varying waveform that excites the electromagnet so as to cause the terminal end of the optical fiber means to move at a more uniform rate.

6. The scanning optical microscope of claim 1 wherein the oscillation means includes:
means for imparting an electrical charge to the free end portion of the optical fiber;
at least one electrostatic deflection plate adjacent the free end portion of the optical fiber; and
means for periodically exciting the electrostatic deflection plate with electrical energy, thereby imparting oscillatory motion to the free end portion of the optical fiber.

7. A scanning optical microscope for imaging an object comprising:
an optical source;
an optical detector;
an optical fiber for coupling optical energy from the optical source to the object and for coupling optical energy reflected from the object to the optical detector, said optical fiber having a terminal end and a micro-lens formed on said terminal end; and
scanning means for moving the terminal end of the optical fiber relative to the object.

8. The scanning optical microscope of claim 7 in which the micro-lens is substantially conical in shape.

9. An optical microscope for imaging an object comprising:
a laser;
optical means for coupling light from the laser to the object and for coupling light reflected from the object back into the laser, the light reflected back into the laser causing an operational characteristic of the laser to vary; and
monitor means for monitoring said operational characteristic, said monitor means further including data processing means for sampling said operational characteristic.

10. The optical microscope of claim 9 in which the monitor means includes optical detector means for receiving light radiated by the laser and for producing an electrical output signal therefrom.

11. The optical microscope of claim 9 in which the monitor means includes means for monitoring the operating current drawn by the laser.

12. The optical microscope of claim 9 in which the monitor means includes means for monitoring the voltage across the laser.

13. The optical microscope of claim 9 in which the laser is operated at a constant power by an automatic gain control circuit and in which the monitor means monitors the automatic gain control circuit so as to detect variations in the electrical operating parameters of the laser.

14. The optical microscope of claim 9 in which the optical means comprises an optical fiber.

15. The optical microscope of claim 14 in which the optical fiber has a first end coupled to the laser and a second end adjacent the object and in which the second end includes a micro-lens.

16. A scanning optical microscope suited for determining the topography of a surface comprising:

optical source means for providing optical energy at first and second wavelengths;

optical detector means for detecting optical energy at first and second wavelengths and producing first and second outputs corresponding thereto;

optical fiber means for coupling optical energy from the optical source means to the surface and for coupling optical energy reflected from the surface to the optical detector means, said optical fiber means having a terminal end for positioning adjacent the surface;

scanning means for moving the terminal end of the optical fiber means relative to the surface; and

data processing means for resolving topographical ambiguities in the detected surface by reference to differences between the first and second outputs from the optical detector means.

17. The scanning optical microscope of claim 16 in which the optical source means comprises at least one laser and in which the optical detector means comprises means for monitoring an operational characteristic of the laser.

18. The scanning optical microscope of claim 16 in which the terminal end of the optical fiber means includes a micro-lens.

FIG.1

0283256